(19) Europäisches Patentamt
European Patent Office
Office européen des brevets

(11) **EP 4 045 438 B1**

(12) **EUROPÄISCHE PATENTSCHRIFT**

(45) Veröffentlichungstag und Bekanntmachung des Hinweises auf die Patenterteilung:
**29.01.2025   Patentblatt 2025/05**

(21) Anmeldenummer: **20785920.8**

(22) Anmeldetag: **22.09.2020**

(51) Internationale Patentklassifikation (IPC):
**B65G 23/14** *(2006.01)*      **B65G 35/06** *(2006.01)*
**B65G 47/96** *(2006.01)*

(52) Gemeinsame Patentklassifikation (CPC):
**B65G 23/14;** B65G 35/06; B65G 47/96

(86) Internationale Anmeldenummer:
**PCT/EP2020/076441**

(87) Internationale Veröffentlichungsnummer:
**WO 2021/073843 (22.04.2021 Gazette 2021/16)**

(54) **ANTRIEBSVORRICHTUNG FÜR EINEN FÖRDERWAGEN EINER FÖRDEREINRICHTUNG**

DRIVING DEVICE FOR A TROLLEY OF A CONVEYING DEVICE

DISPOSITIF D'ENTRAÎNEMENT POUR UN CHARIOT D'UN SYSTÈME DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **17.10.2019   DE 102019007225**

(43) Veröffentlichungstag der Anmeldung:
**24.08.2022   Patentblatt 2022/34**

(73) Patentinhaber: **Interroll Holding AG**
**6592 Sant' Antonino (CH)**

(72) Erfinder:
• **EISINGER, Thomas**
**41836 Hückelhoven (DE)**
• **LAIER, Jan-Niklas**
**41836 Hückelhoven (DE)**

(74) Vertreter: **Kohlhof, Stephan**
**Interroll Innovation GmbH**
**Opelstr. 1**
**41836 Hückelhoven (DE)**

(56) Entgegenhaltungen:
EP-A1- 1 199 261      EP-A2- 1 057 755
EP-B1- 1 448 463      WO-A2-2017/083109
DE-U1- 20 107 487     FR-A- 1 368 646
JP-A- H04 226 213     NL-A- 9 800 010

**Beschreibung**

Die Erfindung betrifft eine Fördereinrichtung zur Förderung von Fördergut mit einer Antriebsvorrichtung für einen Förderwagen.

Wie in der DE 10 2017 006 212 A1 offenbart, wird bei einer herkömmlichen Antriebsvorrichtung für einen Förderwagen einer Fördereinrichtung der Förderwagen üblicherweise mittels einer Gummiblockkette gezogen. Solche Förderwagen werden mit einem quer zur Förderrichtung angeordneten und antreibbaren Fördergurt ausgestattet und bevorzugt in umlaufenden, insbesondere geschlossenen, Wagenketten als Quergurt-Sorter (Crossbelt-Sorter bzw. Quergurtförderer) eingesetzt, um Stückgüter zur Hochleistungsverteilung in Post- und Distributionszentren aufzunehmen und zu verteilen. Dabei wird die Gummiblockkette in einem Spalt zwischen einem Antriebsriemen und einem Gegendruckriemen einer Antriebskraftübertragungseinrichtung geklemmt. Der seinerseits angetriebene Antriebsriemen treibt auf diese Weise die Gummiblockkette und somit die Förderwagen an.

Solche bekannten Lösungen sind meist schwer, wartungsintensiv und teuer in der Herstellung. Diese Nachteile sind überwiegend der zuvor beschriebenen Antriebsart geschuldet und resultieren beispielsweise aus der komplexen Antriebskraftübertragungseinrichtung mit Antriebsriemen und Gegendruckriemen. Zu den hohen Kosten trägt insbesondere die sich aus der Antriebsart ergebende Vielzahl der unterschiedlichen Teile bei, insbesondere die dabei auch erforderliche Gummiblockkette, die in der Länge der gesamten Förderstrecke benötigt wird.

Ein weiterer Nachteil solcher bekannten Lösungen ist, dass ein Raum unterhalb des jeweiligen Förderwagens zumindest teilweise von der Gummiblockkette durchquert wird. Dies erschwert oder verhindert einen Einsatz von Förderwagen, die ihr Fördergut mittels einer oder mehrerer Klappen in der Art einer Falltüre nach unten aussortieren. Diese Art Förderreinrichtung wird auch als Split Tray Sorter bezeichnet.

Die US 6,244,188 B1 offenbart eine Einrichtung mit einer Mehrzahl an bewegbaren Fahrzeugen. Zum Antreiben der Fahrzeuge wird ein Antriebsband zeitweise am Fahrzeug befestigt. Das Antriebsband wird dazu anhand einer Umlenkrolle in eine Kerbe am Fahrzeug eingepresst, wodurch an der Kerbe eine kraftschlüssige Verbindung zwischen Fahrzeug und Antriebsband hergestellt wird. Das Antriebsband muss auch nach langer Nutzungsdauer stets einen Oberflächenzustand aufweisen, der die Pressverbindung zum Fahrzeug unterstützt. Die US 2007 /0283839 A1 offenbart eine ähnliche Einrichtung, bei der eine Vielzahl von Paletten entlang einer Fahrstrecken von einer Antriebseinheit angetrieben wird. Ein Zahnriemen wird dabei zur Antriebsverbindung zwischen einem Antriebsrad und den Paletten verwendet. Der Zahnriemen wird über ein Zahnrad angetrieben. Die Antriebseinheit ist im Wesentlichen horizontal angeordnet ist. Die Anpresskraft wird über Pneumatikaktuatoren bereitgestellt. Es sind die Antriebseinheiten paarweise beidseitig der Paletten angeordnet. Dadurch werden die Paletten durch die Anpresskraft auf Ihrer gesamten Breite verspannt.

Die EP 1448463 B1 und die JP H04 226213 A offenbaren einen Split Tray Sorter, umfassend zumindest einen Förderwagen mit einer Antriebsfläche, wobei die Antriebsfläche in Draufsicht betrachtet seitlich neben dem Aufnahmebereich des Förderwagens zur Aufnahme von Stückgut angeordnet ist. Diese Dokumente offenbaren einen Split Tray Sorter gemäß dem Oberbegriff des Anspruchs 1.

Es ist eine Aufgabe der Erfindung, einen verbesserten Split Tray Sorter zur Verfügung zu stellen, bei der insbesondere der Wartungsaufwand und die Kosten verringert sind und/oder die Herstellung vereinfacht ist.

Die Aufgabe wird durch die Gegenstände der unabhängigen Patentansprüche gelöst. Die jeweiligen abhängigen Patentansprüche betreffen bevorzugte Weiterbildungen des Gegenstands der vorliegenden Erfindung.

Ein Aspekt betrifft eine Fördereinrichtung nämlich Split Tray Sorter umfassend zumindest einen Förderwagen mit einer Antriebsfläche und eine Antriebsvorrichtung für den Förderwagen der Fördereinrichtung, mit einer Antriebsquelle zum Erzeugen einer Antriebskraft und einer Antriebskraftübertragungseinrichtung zum Übertragen der Antriebskraft auf eine Antriebsfläche des Förderwagens, wobei der Förderwagen mindestens ein Widerlagerelement aufweist, das als Widerlager für die Antriebskraftübertragungseinrichtung ausgebildet ist.

Ein Vorteil der vorliegenden Erfindung ist eine vereinfachte und kostengünstigere Herstellung der Antriebsvorrichtung und/oder der Antriebskraftübertragungseinrichtung wegen eines reduzierten Bauteilaufwands. Dabei kann auch der benötigte Bauraum reduziert werden und/oder der Installationsaufwand. Im Vergleich zu einer üblichen Antriebsvorrichtung kann auf eine Gegendruckeinrichtung an der Antriebskraftübertragungseinrichtung verzichtet werden. Dies ist ermöglicht mittels der Nutzung eines oder mehrerer am Förderwagen angeordneter Widerlager, welche ohnehin bereits am Förderwagen vorhanden sein können und als Widerlager für die Antriebskraftübertragungseinrichtung und zum Aufnehmen der Antriebskraft geeignet sind. Dabei wird eine am Förderwagen ausgebildete Antriebsfläche zum Antreiben des Förderwagens genutzt, welche zum Antreiben des Förderwagens geeignet ist.

Die Antriebsfläche kann als kostengünstiges Bauteil entweder ohnehin am Förderwagen vorhanden sein oder ausschließlich dazu an dem Förderwagen angebracht sein, dass die Antriebskraft auf die Antriebsfläche übertragen wird. Weiter kann auf eine Gummiblockkette verzichtet werden, da wie zuvor beschrieben einerseits eine am Förderwagen ausgebildete Antriebsfläche zum Antreiben des Förderwagens genutzt wird und andererseits die Förderwagen mittels einfacheren Mitteln, insbesondere nachfolgend beschriebenen Koppelstangen und/oder Doppelgelenken, miteinander gekoppelt sind.

Ein weiterer Vorteil der vorliegenden Erfindung ist eine universelle Einsatzmöglichkeit der Antriebsvorrichtung und/oder der Antriebskraftübertragungseinrichtung für unterschiedliche Förderwagen-Typen, erfindungsgemäß für einen Förderwagen eines Split Tray Sorters.

Die Antriebsvorrichtung für den Förderwagen der Fördereinrichtung kann eine Vorrichtung zum Antreiben des Förderwagens der Fördereinrichtung sein, mittels der der Förderwagen entlang der Fördereinrichtung fortbewegbar ist, um beispielsweise ein Fördergut auf dem Förderwagen von einem Startort zu einem Zielort zu transportieren.

Der Förderwagen der Fördereinrichtung kann zum Transportieren des Förderguts eine im Wesentlichen senkrecht zu einer Schwerkraftrichtung ausgebildete Förderebene und/oder Förderfläche aufweisen, auf der das Fördergut aufgrund der auf das Fördergut wirkenden Schwerkraft abstellbar und somit mittels des Förderwagens transportierbar ist. Der Förderwagen kann beispielsweise Klappen eines Split Tray Sorters aufweisen.

Die Fördereinrichtung kann zum Transportieren von Fördergut in eine Förderrichtung einen oder mehrere Förderwägen und eine oder mehrere Antriebsvorrichtungen für den oder die Förderwägen aufweisen. Insbesondere kann die Fördereinrichtung eine geschlossene Kette von miteinander verbundenen Förderwagen aufweisen, also beispielsweise als ein Horizontalförderer ausgebildet sein.

Als Antriebsquelle der Antriebsvorrichtung kann beispielsweise eine elektrische, hydraulische oder elektrohydraulische Antriebsquelle zum Einsatz kommen. Die Antriebsquelle kann als ein Motor ausgebildet sein und stellt die Antriebskraft bereit. Die Antriebsquelle kann als Bestandteil der Antriebskraftübertragungseinrichtung ausgebildet sein.

Die Antriebskraftübertragungseinrichtung zum Übertragen der Antriebskraft der Antriebsquelle auf die Antriebsfläche des Förderwagens kann eine antriebswirksame Fläche aufweisen, von der die Antriebskraft auf die Antriebsfläche übertragbar oder übertragen ist. Die Antriebskraftübertragungseinrichtung ist mit der Antriebsquelle verbunden und überträgt zumindest einen Teil der Antriebskraft auf den Förderwagen.

Die Antriebskraftübertragungseinrichtung kann als ein statisches Bauteil ausgebildet sein, welches beispielsweise an einem Rahmen der Fördereinrichtung befestigt und/oder angeordnet ist.

Die Antriebsfläche kann eine am Förderwagen ohnehin vorhandene Fläche zum Antreiben des Förderwagens sein, die zwar aus einem anderen Grund erforderlich ist, aber auch zum Antreiben des Förderwagens geeignet ist. Alternativ dazu kann die Antriebsfläche ausschließlich zum Übertragen der Antriebskraft auf die Antriebsfläche an dem Förderwagen angebracht sein. Die Antriebsfläche ist als eine angetriebene Fläche ausgebildet. Die Antriebsfläche kann derart ausgebildet sein, dass sie sich mit dem Förderwagen mit- und relativ zur Antriebskraftübertragungseinrichtung bewegt.

Die Antriebsfläche kann beim Vorbeifahren an der Antriebskraftübertragungseinrichtung mit dieser in Wirkkontakt stehen, so dass die Antriebskraft zumindest teilweise auf sie übertragen werden kann. Die Antriebsfläche kann sich über die gesamte Länge des Förderwagens erstrecken, so dass sie möglichst lange in Wirkkontakt mit der Antriebskraftübertragungseinrichtung stehen kann.

Das Widerlagerelement kann ein an dem Förderwagen angeordnetes Element sein, das zwar eventuell auch einem anderen Zweck dienen kann, aber eben auch als Widerlager für die Antriebskraftübertragungseinrichtung geeignet ist. Dabei kann das Widerlagerelement eine Andruckkraft der Antriebskraftübertragungseinrichtung aufnehmen und dadurch das Übertragen der Antriebskraft unterstützen und/oder ermöglichen. Beispielsweise kann das Widerlagerelement als eine Tragrolle und/oder eine Führungsrolle an dem Förderwagen ausgebildet sein, auf der sich der Förderwagen gegen die Schwerkraft und/oder eine horizontale oder vertikale Kraft, insbesondere eine Fliehkraft, abstützt, insbesondere an einem - vorteilhafterweise stationären - Bauteil der Fördereinrichtung wie beispielsweise einer Führung. Das Widerlagerelement kann die Antriebsfläche des Förderwagens gegenüber der Antriebskraftübertragungseinrichtung abstützen, insbesondere gegenüber deren antriebswirksamer Fläche. Das Widerlagerelement kann dazu ausgebildet sein, eine Andruckkraft der Antriebskraftübertragungseinrichtung auf die Antriebsfläche aufzunehmen, um dadurch das Übertragen der Antriebskraft von der Antriebskraftübertragungseinrichtung auf die Antriebsfläche des Förderwagens zu unterstützen und/oder zu ermöglichen.

Vorteilhafterweise kann die Antriebsfläche und/oder der Förderwagen mittels des Widerlagerelements gegen eine Andruckkraft der Antriebskraftübertragungseinrichtung abgestützt sein.

Insbesondere kann die Antriebsfläche eine ausreichende Stabilität zum Aufnehmen einer für die Kraftübertragung erforderlichen Andruckkraft aufweisen, beispielsweise eine dafür ausreichende Biegesteifigkeit und/oder Oberflächenhärte. Die Antriebsfläche kann beispielsweise eine, insbesondere an diese Anforderungen angepasste, Rahmenfläche des Förderwagens sein.

Somit kann die für die Antriebskraftübertragung erforderliche Andruckkraft zuverlässig auf die Antriebsfläche ausgeübt und/oder von der Antriebsfläche aufgenommen werden, ohne dass die Antriebsfläche und/oder der Förderwagen wegen der auf sie und/oder ihn ausgeübten Andruckkraft ausweicht oder verformt wird.

Vorteilhafterweise kann die Antriebskraftübertragungseinrichtung in Förderrichtung gesehen ausschließlich auf einer lateralen Seite des Förderwagens, das heißt links oder rechts, angeordnet sein. Mit anderen Worten ist der Förderwagen in Förderrichtung gesehen ausschließlich auf einer Seite des Förderwagens, das heißt links oder rechts, von der Antriebskraftübertragungseinrichtung antreibbar oder angetrieben.

Bevorzugt kann die Antriebskraftübertragungseinrichtung auf einer Kurveninnenseite der Fördereinrichtung angeordnet, wobei die Fördereinrichtung ausschließlich gleichsinnige Kurven aufweisen kann. Die Antriebskraftübertragungseinrichtung kann dabei regelmäßig auf einem geraden Abschnitt der Fördereinrichtung angeordnet sein.

Vorteilhafterweise kann die Antriebskraft reibschlüssig von der Antriebskraftübertragungseinrichtung auf die Antriebsfläche übertragbar oder übertragen sein. Eine reibschlüssige Kraftübertragung setzt eine Normalkraft auf die reibschlüssig verbundenen Flächen voraus. Bei ausreichender Normalkraft und/oder ausreichendem Reibungskoeffizient für Haftreibung der reibschlüssig verbundenen Flächen ist eine Relativbewegung der Flächen zumindest reduziert oder verhindert.

Die Antriebskraftübertragungseinrichtung zum Übertragen der Antriebskraft der Antriebsquelle auf die Antriebsfläche des Förderwagens kann eine geeignete Einrichtung mit einer zum reibschlüssigen Übertragen der Antriebskraft ausreichenden Reibfläche sein. Die Antriebskraftübertragungseinrichtung kann beispielsweise mindestens einen Reibriemen und/oder mindestens ein Reibrad enthalten.

Vorteilhafterweise kann die Antriebsfläche als eine Reibfläche ausgebildet und zusammen mit der antriebswirksamen Fläche auf einen Reibungskoeffizient für eine wirksame oder optimierte reibschlüssige Kraftübertragung ausgelegt sein.

Mit der obigen Konfiguration kann die Antriebskraft zuverlässig von der Antriebskraftübertragungseinrichtung auf die Antriebsfläche übertragen werden.

Vorteilhafterweise kann das mindestens eine Widerlagerelement als eine Rolle und/oder als ein Gleitelement des Förderwagens ausgebildet sein. Somit kann ein ohnehin für eine Bewegung des Förderwagens in Förderrichtung erforderliches Bauteil, mit dem sich der Förderwagen bei der Bewegung gegen die Schwerkraft und/oder eine horizontale und/oder vertikale Kraft, insbesondere eine Fliehkraft, abstützt, als Widerlagerelement genutzt werden. Dadurch kann eine Reduzierung der Teileanzahl der Antriebsvorrichtung realisiert werden.

Beispielsweise ist das mindestens eine Widerlagerelement als Tragrolle und/oder als Führungsrolle des Förderwagens ausgebildet.

Dabei ist die Tragrolle zum Tragen der Gewichtskraft des Förderwagens ausgebildet und kann eine etwa horizontale Drehachse aufweisen. Die Führungsrolle ist zum Führen des Förderwagens entlang eines Förderwegs ausgerichtet und kann eine etwa vertikale Drehachse aufweisen oder zumindest eine Drehachse mit einer vertikalen Komponente. Somit können ohnehin an dem Förderwagen vorhandene Mittel zu seiner Abstützung an der Fördereinrichtung auch als Widerlager für die Antriebskraftübertragungseinrichtung und zum Übertragen der Antriebskraft benutzt werden. Die obige Konfiguration trägt dazu bei, bei der erfindungsgemäßen Antriebsvorrichtung den Wartungsaufwand und die Kosten zu verringern und/oder deren Herstellung zu vereinfachen.

Vorteilhafterweise kann eine - insbesondere eine Resultierende der - Andruckkraft der Antriebskraftübertragungseinrichtung auf die Antriebsfläche zumindest teilweise im Wesentlichen senkrecht zur Antriebsfläche ausgerichtet sein. Es versteht sich, dass die Antriebsfläche dabei derart entsprechend, insbesondere eben und zur antriebswirksamen Fläche parallel, ausgebildet sein kann, dass die antriebswirksame Fläche der Antriebskraftübertragungseinrichtung möglichst großflächig an der Antriebsfläche anliegt.

Mit der obigen Konfiguration kann ein möglichst hoher Wirkungsgrad bei der Übertragung der Antriebskraft auf die Antriebsfläche erreicht werden.

Vorteilhafterweise kann die antriebswirksame Fläche der Antriebskraftübertragungseinrichtung im Wesentlichen horizontal ausgerichtet sein, wobei die antriebswirksame Fläche mit einer im Wesentlichen vertikal ausgerichteten Andruckkraft an die Antriebsfläche angedrückt ist.

Die obige Konfiguration kann weiter dazu beitragen, einen möglichst hohen Wirkungsgrad bei der Übertragung der Antriebskraft auf die Antriebsfläche zu erreichen. Hierbei können insbesondere Tragrollen als Widerlagerelement verwendet werden.

Vorteilhafterweise kann die Andruckkraft mindestens mittels der Gewichtskraft der Antriebskraftübertragungseinrichtung bewirkt sein. Dabei kann die Andruckkraft insbesondere ausschließlich mittels der Gewichtskraft der Antriebskraftübertragungseinrichtung bewirkt sein oder die Andruckkraft kann zusätzlich dazu mit zusätzlichen Mitteln erhöht werden. Da die Gewichtskraft der Antriebskraftübertragungseinrichtung ohnehin immer vorhanden ist, stellt diese Konfiguration eine besonders einfache Möglichkeit bereit, die Andruckkraft zu erzeugen oder zumindest zu unterstützen.

Vorteilhafterweise kann eine Andruckkraft der Antriebskraftübertragungseinrichtung zumindest teilweise mittels einer Andruckeinrichtung bewirkt sein.

Beispielsweise kann die Andruckeinrichtung als eine, insbesondere zwischen der Fördereinrichtung und der Antriebskraftübertragungseinrichtung angeordnete, Federandruckeinrichtung ausgebildet sein. Alternativ oder zusätzlich dazu kann die Andruckeinrichtung als ein oder mehrere Zusatzgewichte für die Antriebskraftübertragungseinrichtung ausgebildet sein.

Mit der obigen Konfiguration kann je nach Ausgestaltung der Antriebskraftübertragungseinrichtung die Andruckkraft ausschließlich mittels der Gewichtskraft der Antriebskraftübertragungseinrichtung bewirkt sein und auf eine zusätzliche Andruckeinrichtung verzichtet werden oder je nach Anwendungsfall die Andruckkraft mit einer zusätzlich vorhandenen Andruckeinrichtung erhöht werden.

Beispielsweise kann bei im Wesentlichen horizontal ausgerichteter antriebswirksamer Fläche die Andruckkraft ausschließlich mittels der Gewichtskraft der Antriebskraftübertragungseinrichtung bewirkt sein. Sollte jedoch dabei eine Erhöhung der Andruckkraft erforderlich sein, kann die Andruckkraft auch zusätzlich dazu mittels der Andruckeinrichtung bewirkt sein.

Vorteilhafterweise kann die Antriebskraftübertragungseinrichtung einen Antriebsriemen aufweisen, der mittels der Andruckkraft an die Antriebsfläche drückbar oder angedrückt ist.

Dabei kann, wie zuvor schon erwähnt, auf eine Gegendruckeinrichtung in der Antriebskraftübertragungseinrichtung - wie beispielsweise einen Gegendruckriemen - verzichtet werden.

Die obige Konfiguration trägt dazu bei, bei der erfindungsgemäßen Antriebsvorrichtung den Wartungsaufwand und die Kosten zu verringern und/oder deren Herstellung zu vereinfachen. Beispielsweise kann die antriebswirksame Fläche der Antriebskraftübertragungseinrichtung eine mit der Antriebsfläche in Berührung befindliche Fläche des Antriebsriemens oder einer Antriebsrolle, insbesondere an deren jeweiliger Unterseite, sein.

Der Antriebsriemen kann beispielsweise als Mehrrippenriemen ausgebildet sein. Insbesondere kann die Antriebsfläche als eine Reibfläche ausgebildet und zusammen mit der antriebswirksamen Fläche auf einen Reibungskoeffizient für eine wirksame oder optimierte reibschlüssige Kraftübertragung ausgelegt sein.

Mit der obigen Konfiguration kann eine Antriebsvorrichtung für Förderwagen bereitgestellt werden, die trotz eines Spaltes zwischen den miteinander zu der geschlossenen Förderwagen-Kette verbundenen Förderwagen wie ein kontinuierlicher Antrieb der Förderwagen wirkt. Dabei ist eine Längenausdehnung der antriebswirksamen Fläche des Antriebsriemens größer als der Spalt zwischen den Förderwagen.

Die antriebswirksame Fläche des Antriebsriemens bemisst sich in ihrer Längenausdehnung etwa zwischen jeweiligen Auflagestellen des Antriebsriemens an der Antriebsfläche an den Umlenkrollen oder den äußeren Andruckrollen des Antriebsriemens und in ihrer Breitenausdehnung etwa in der Breite des Antriebsriemens.

Vorteilhafterweise kann die Fördereinrichtung eine Mehrzahl von in vorbestimmten Abständen zueinander angeordneten Antriebskraftübertragungseinrichtungen aufweisen.

Dies erhöht die insgesamt bereitgestellte Antriebskraft auf die Förderanlage, beispielsweise bei Fördereinrichtungen mit langen Zügen von Förderwagen, bei zu überwindenden Steigungen und/oder bei der Förderung schwerer Lasten.

Vorteilhafterweise kann das Widerlagerelement senkrecht zur Förderrichtung in einem minimalen Abstand zu einer Wirkungslinie einer Andruckkraft der Antriebskraftübertragungseinrichtung ausgebildet sein, der kleiner ist als etwa 70 mm und/oder etwa 50 mm. Der Abstand ist horizontal senkrech zur Förderrichtung ausgebildet. Beispielsweise kann der minimale Abstand zwischen der Mitte der Tragrolle einerseits und der Mitte des Antriebsriemens andererseits ausgebildet sein.

Insbesondere kann das Widerlager mit einem Mindestabstand zu der Wirkungslinie der Andruckkraft ausgebildet sein. Der Mindestabstand kann z.B. größer als etwa 0 mm und kleiner als etwa 10 mm sein.

Insbesondere können in Förderrichtung gesehen jeweils seitlich, d.h. links und rechts, am Förderwagen mindestens zwei Widerlagerelemente angeordnet sein, wobei auf jeder Seite in Förderrichtung vorne und hinten an dem Förderwagen jeweils mindestens ein Widerlagerelement angeordnet sein kann. Weiter können die Widerlagerelemente auf der Seite der Antriebsvorrichtung derart mit dem minimalen Abstand quer zur Förderrichtung gesehen angeordnet sein, dass die Wirkungslinie der Andruckkraft innerhalb eines oder auf einem gedachten Rechteck aus Verbindungslinien der der Reihe nach verbundenen Widerlagerelemente liegt. Der minimale Abstand ist dabei der kleinste beim Passieren der Antriebskraftübertragungseinrichtung auftretende Abstand.

Beispielsweise kann der minimale Abstand des Widerlagerelements kleiner als etwa 60 mm, bevorzugt kleiner als etwa 40 mm sein.

Das Widerlagerelement kann vorteilhafterweise auf einer der Antriebsfläche gegenüberliegenden Seite des Förderwagens ausgebildet sein.

Mit der obigen Konfiguration kann eine im Wesentlichen stabile Lage des mittels der erfindungsgemäßen Antriebsvorrichtung angetriebenen Förderwagens erreicht und störende Bewegungen des Förderwagens wie beispielsweise - abhängig von der genauen Konfiguration - ein Rollen (Bewegung um eine Längsachse), ein Nicken (Bewegung um eine Querachse) und/oder ein Gieren (Bewegung um eine Hochachse) verringert oder vermieden werden.

Ein weiterer Aspekt der Erfindung betrifft eine Fördereinrichtung gemäß dem voranstehenden Aspekt, wobei die Antriebskraftübertragungseinrichtung in eine an der Fördereinrichtung ausgebildeten Halterung einführbar und darin arretierbar ist.

Die Antriebskraftübertragungseinrichtung kann als eine Art Koffermodul ausgebildet sein, das mit einem oder mehreren Griffen zur Handhabung ausgebildet ist.

Bevorzugt kann die Halterung lediglich einen, insbesondere translatorischen, Freiheitsgrad für die Bewegung der Antriebskraftübertragungseinrichtung in Richtung der Andruckkraft aufweisen.

Die Halterung kann als in Förderrichtung voneinander beabstandete und zueinander geöffnete U-Profile oder H-Profile ausgebildet sein. Die jeweiligen Profile können beispielsweise mittels eines Haltewinkels an der Fördereinrichtung montiert sein.

Die Antriebskraftübertragungsvorrichtung ist so an die Antriebsquelle koppelbar, dass sie die Antriebskraft aufnimmt. Weiterhin ist die Antriebskraftübertragungsvorrichtung dazu konfiguriert, so in Wirkkontakt mit der Antriebsfläche eines Förderwagens zu treten, dass sie die Antriebskraft auf die Antriebsfläche und somit den Förderwagen überträgt, wobei ein Widerlagerelement des Förderwagens als Widerlager für die Antriebskraftübertragungseinrichtung ausgebildet ist.

Nachfolgend sind Ausführungsbeispiele der erfindungsgemäßen Fördereinrichtung anhand von Zeichnungen näher erläutert. Es versteht sich, dass die vorliegende Erfindung nicht auf die nachstehend beschriebenen Ausführungsbeispiele beschränkt ist, und dass einzelne Merkmale davon zu weiteren Ausführungsbeispielen kombiniert werden können.

Es zeigen:

Figur 1    einen Ausschnitt einer Fördereinrichtung mit einer erfindungsgemäßen Antriebsvorrichtung gemäß einem Ausführungsbeispiel der Erfindung in einer Seitenansicht;

Fig. 2    eine räumliche Ansicht der Antriebsvorrichtung gemäß Fig. 1;

Fig. 3    eine Draufsicht einer Antriebsvorrichtung , die nicht Teil der Erfindung ist.

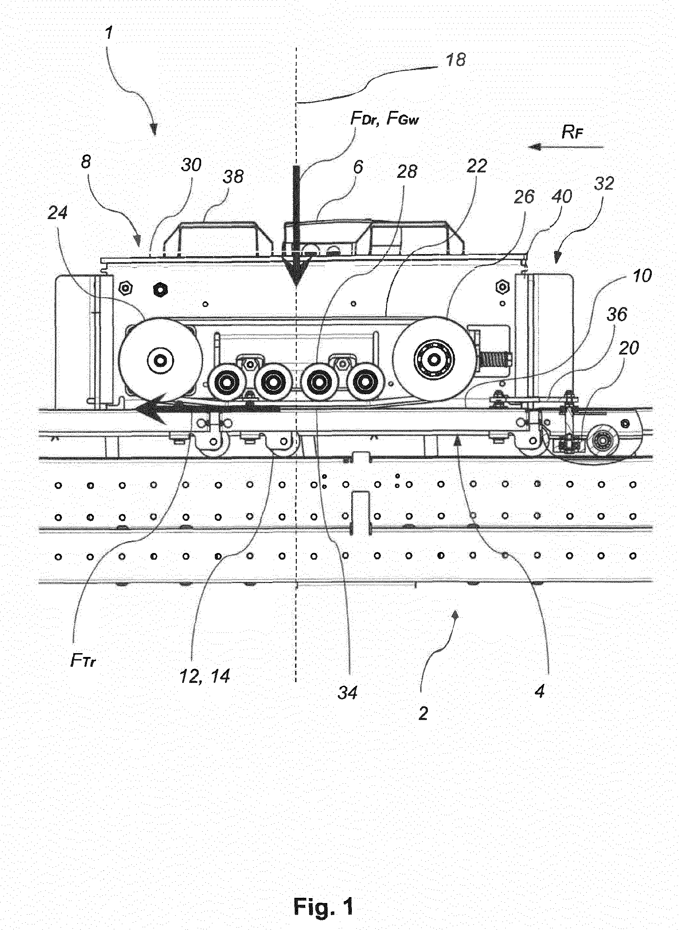

Eine in Fig. 1 gezeigte Antriebsvorrichtung 1 gemäß einem Ausführungsbeispiel der Erfindung ist in einer Fördereinrichtung 2 zum Antrieb dort verwendeter Förderwagen 4 angeordnet, wie in einer Seitenansicht eines Ausschnitts der Fördereinrichtung 2 gezeigt. In den Figuren ist die Fördereinrichtung 2 als ein Split Tray Sorter ausgebildet, bei dem jeder Förderwagen 4 zwei Tragschalen aufweist, die zum Entladen der transportierten Güter nach unten geöffnet werden können.

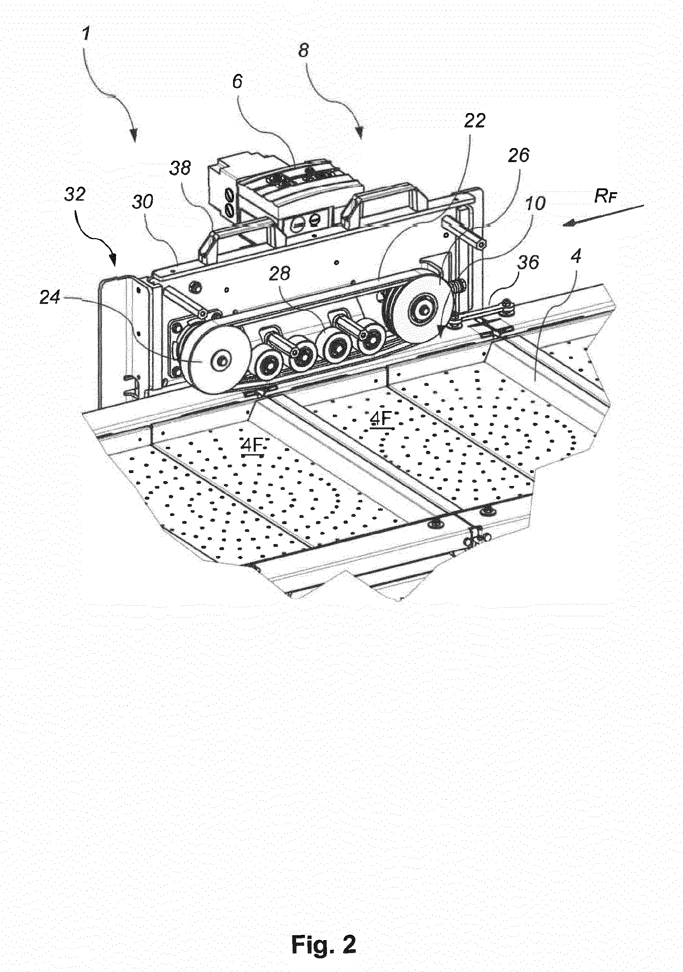

Wie beispielsweise in der perspektivischen Ansicht der Fig. 2 gezeigt, kann die Antriebsvorrichtung 1 in Förderrichtung RF gesehen lediglich auf einer lateralen Seite der Fördereinrichtung 2 und/oder des Förderwagens 4 angeordnet sein.

Die Antriebsvorrichtung 1 weist eine Antriebsquelle 6 zum Erzeugen einer Antriebskraft Frr und eine Antriebskraftübertragungseinrichtung 8 zum Übertragen der Antriebskraft FTr auf eine Antriebsfläche 10 des Förderwagens 4 auf. Die Antriebskraft FTr ist dazu konfiguriert, den Förderwagen 4 etwa in Förderrichtung RF anzutreiben und ist deswegen etwa in Förderrichtung RF ausgerichtet. Die Antriebskraft FTr ist als die den Förderwagen 4 antreibende Kraft gezeigt.

Die Antriebsquelle 6 kann, wie hier gezeigt, an der und/oder als Bestandteil der Antriebskraftübertragungseinrichtung 8 angeordnet sein und beispielsweise als Elektromotor ausgebildet sein. Im Betrieb drückt die Antriebskraftübertragungseinrichtung 8 mit einer Andruckkraft FDr auf die Antriebsfläche 10 des Förderwagens 4, um die Antriebskraft FTr auf die Antriebsfläche 10 zu übertragen. Die Antriebsfläche 10 des Förderwagens 4 kann hierbei als eine sich etwa über die gesamte Länge des Förderwagens 4 in Förderrichtung RF erstreckende, etwa horizontal angeordnete Fläche ausgebildet sein, z.B. als eine Schiene. Die Antriebsfläche 10 ist an einem lateralen Randbereich des Förderwagens 4 angeordnet, neben den Tragschalen des Förderwagens 4.

Der Förderwagen 4 weist mindestens ein Widerlagerelement 12 auf, das als Widerlager für die Antriebskraftübertragungseinrichtung 8 und zum Unterstützen der Übertragung der Antriebskraft FTr ausgebildet ist. Wie in dem in Fig. 1 gezeigten Ausführungsbeispiel dargestellt, kann an dem Förderwagen 4 zumindest eine Tragrolle 14 ausgebildet sein, auf der sich der Förderwagen 4 an der Fördereinrichtung 2 gegen die Schwerkraft abstützt. Bevorzugt weist der Förderwagen 4 mehrere Tragrollen 14 auf, z.B. vier Tragrollen 14. Die Tragrollen 14 dienen zum abstützenden Tragen der Gewichtskraft des Förderwagens 4 und können eine etwa horizontale Rotationsachse aufweisen, die etwa lateral zur Förderrichtung RF ausgerichtet ist.

Wie in Fig. 2 gezeigt, kann der Förderwagen 4 in der Draufsicht gesehen eine im Wesentlichen rechteckige Form aufweisen. In den Eckbereichen des rechteckigen Förderwagens 4 kann je eine Tragrolle 14 angeordnet sein, so dass an dem Förderwagen 4 insgesamt vier Tragrollen 14 vorhanden sein können. Alternativ dazu können an dem Förderwagen 4 mehr als vier Tragrollen 14 vorhanden sein. Die in Förderrichtung RF gesehen jeweils seitlich, d.h. links und rechts, am Förderwagen vorhandenen Tragrollen 14 können in Förderrichtung RF fluchten. Der Förderwagen 4 weist eine Förderfläche 4F auf, auf der Stückgut abgelegt werden kann.

Die vorhandenen Tragrollen 14 können die Funktion des Widerlagerelements 12 ausüben. Dabei können die Tragrollen 14 insbesondere quer zur Förderrichtung RF, also in eine etwa horizontale laterale Richtung, mit einem minimalen Abstand von einer Wirkungslinie 18 der Andruckkraft FDr angeordnet sein, bevorzugt unmittelbar an der der Antriebskraftübertragungseinrichtung 8 gegenüberliegenden Seite der Antriebsfläche 10. Dadurch kann eine im Wesentlichen stabile Lage des mittels der beschriebenen Antriebsvorrichtung 1 angetriebenen Förderwagens 4 erreicht und störende Bewegungen des Förderwagens 4 wie beispielsweise ein Rollen (Bewegung um eine Längsachse), und/oder ein Nicken (Bewegung um eine Querachse) verringert oder vermieden werden. Dazu können die Antriebskraftübertragungseinrichtung 8 und die Widerlagerelemente 12 auf der Seite der Antriebskraftübertragungseinrichtung 8 relativ zueinander einem minimalen Abstand zur Wirkungslinie 18 der Andruckkraft FDr quer zur Förderrichtung RF gesehen angeordnet sein. Insbesondere können die Widerlagerelemente 12 derart angeordnet sein, dass eine Komponente der Andruckkraft FDr, die ein Nicken bewirken würde, kleiner ist als eine von den Widerlagerelementen 12 aufgebrachte Gegenkraft.

Es ist auch denkbar, dass dazu die Antriebskraftübertragungseinrichtung 8 und die Tragrollen 14 des Förderwagens 4 derart angeordnet sind, dass die Wirkungslinie 18 der Andruckkraft FDr in Kraftrichtung gesehen innerhalb eines oder auf einem gedachten Rechteck aus Verbindungslinien der der Reihe nach verbundenen Widerlagerelemente 12, das heißt, aller Tragrollen 14 am Förderwagen 4, liegt.

Die Andruckkraft FDr ist in Fig. 1 in Förderrichtung RF gesehen in der Mitte der Antriebskraftübertragungseinrichtung 8 als eine Resultierende gezeigt. Tatsächlich wirkt die Andruckkraft FDr nicht punktuell, sondern als Streckenlast und auf die Antriebsfläche 10 eher flächig ein, insbesondere um ein Eintauchen der Antriebskraftübertragungseinrichtung 8 in Zwischenräume zwischen den miteinander verbundenen Förderwagen 4 zu verringern oder zu vermeiden.

Der minimale Abstand zwischen der Tragrolle 14 und der Wirkungslinie 18 der Andruckkraft FDr quer zur Förderrichtung RF kann dann auftreten, wenn die Tragrolle 14 (in lateraler Richtung zur Förderrichtung RF betrachtet) unterhalb der Wirkungslinie 18 der Andruckkraft FDr angeordnet ist.

Weiter kann an dem Förderwagen 4 zumindest eine Führungsrolle 20 vorhanden sein (siehe Fig. 2), auf der oder denen sich der Förderwagen 4 an der Fördereinrichtung 2 gegen eine horizontale Kraft abstützt, beispielsweise eine Fliehkraft bei Kurvenfahrt. Die Führungsrolle 20 kann eine etwa vertikale Rotationsachse aufweisen.

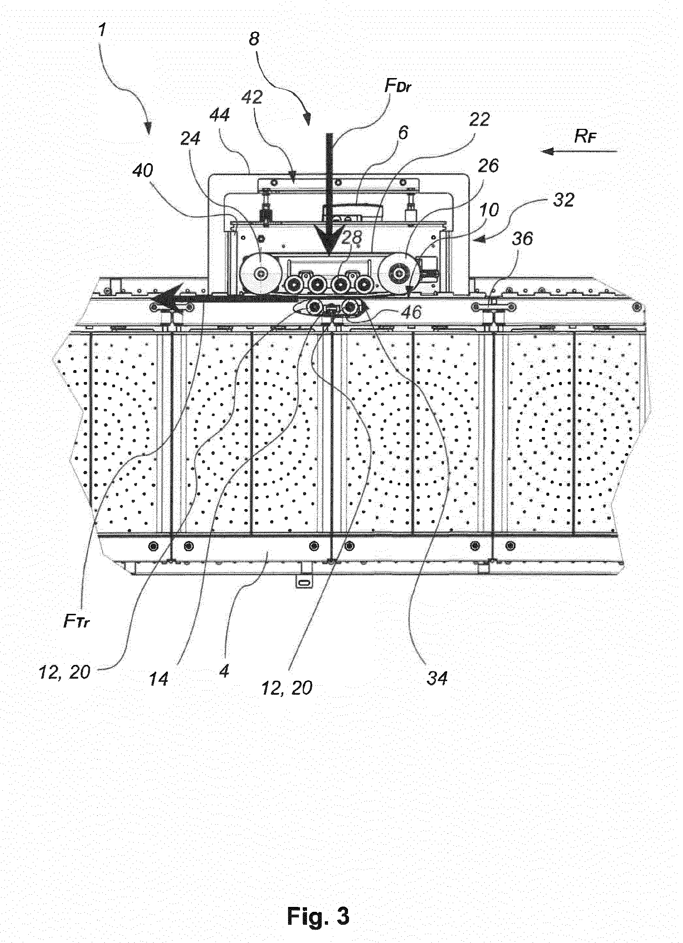

Auf der Seite des Förderwagens 4, auf welcher die Antriebskraftübertragungseinrichtung 8 angeordnet ist (regelmäßig an der Kurveninnenseite), können in Förderrichtung RF gesehen vorne und hinten am Förderwagen 4 jeweils eine Führungsrolle 20 vorhanden sein, so dass an dem Förderwagen 4 insgesamt zwei Führungsrollen 20 vorhanden sein können. Die zwei Führungsrollen 20 aufeinanderfolgender Förderwagen 4 sind in Fig. 3 für ein anderes Ausführungsbeispiel gezeigt. Alternativ dazu können an dem Förderwagen 4 mehr als zwei Führungsrollen 20 vorhanden sein.

Wie weiter in Fig. 1 gezeigt, kann die Antriebskraftübertragungseinrichtung 8 einen Antriebsriemen 22 aufweisen. Der Antriebsriemen 22 kann um zwei Umlenkrollen 24, 26 geschlungen sein. Eine erste Umlenkrolle 24 stellt zudem eine von der Antriebsquelle 6 angetriebene Antriebsrolle 24 dar. Eine zweite Umlenkrollen 26 kann auch als Spannrolle ausgebildet sein. Zwischen der Umlenkrollen 24, 26 kann als Riemenandruckanordnung ein oder mehrere Andruckrollen 28 der Antriebskraftübertragungseinrichtung 8 ausbildet sein, um den Antriebsriemen 22 zuverlässig auf die Antriebsfläche 10 drücken zu können. Wie in dem in Fig. 1 gezeigten Ausführungsbeispiel dargestellt, können vier Andruckrollen 28 ausgebildet sein, aber je nach Achsabstand zwischen der Antriebsrolle 24 und der Umlenkrolle 26 können unterschiedlich viele Andruckrollen 28 ausgebildet sein.

In dem in Fig. 1 gezeigten Ausführungsbeispiel ist gezeigt, dass die Antriebsrolle 24, die Umlenkrolle 26 und die Andruckrollen 28 auf einer Grundplatte 30 der Antriebskraftübertragungseinrichtung 8 angeordnet sein können, wobei die Grundplatte 30 der Antriebskraftübertragungseinrichtung 8 mit in Förderrichtung RF einander gegenüberliegenden freien Endabschnitten in einer an der Fördereinrichtung 2 angebrachten Halterung 32 aufgenommen sein kann.

Die Antriebskraftübertragungseinrichtung 8 kann, wie dargestellt, derart in der Halterung 32 aufgenommen sein, dass eine antriebswirksame Fläche 34 des Antriebsriemens 22 im Wesentlichen horizontal ausgerichtet sein kann, wobei die antriebswirksame Fläche 34 mit einer im Wesentlichen vertikal ausgerichteten Andruckkraft FDr an die Antriebsfläche 10 angedrückt sein kann.

Die antriebswirksame Fläche 34 wird durch die der Antriebsfläche 10 zugewandten Seite des Antriebsriemens 22 bereitgestellt. Sie bemisst sich in dem in Fig. 1 gezeigten Ausführungsbeispiel in ihrer Längenausdehnung etwa zwischen jeweiligen Auflagestellen des Antriebsriemens 22 an der Antriebsfläche 10 an den äußeren Andruckrollen des Antriebsriemens und in ihrer Breitenausdehnung etwa in der Breite des Antriebsriemens. Wenn sich die Andruckrollen 28 mit ihren Auflagestellen auf gleichem Niveau befinden wie die Antriebsrolle 24 und die Umlenkrolle 26 mit deren Auflagestellen, kann sich alternativ dazu die Längenausdehnung der antriebswirksamen Fläche 34 etwa zwischen jeweiligen Auflagestellen des Antriebsriemens 22 an der Antriebsfläche 1 O an der Antriebsrolle 24 und an der Umlenkrolle 26 bemessen.

Die Andruckkraft FDr kann in dem gezeigten Ausführungsbeispiel der Gewichtskraft FGw der Antriebskraftübertragungseinrichtung 8 entsprechen, welche oberhalb der Antriebsfläche 10 angeordnet ist und auf dieser aufliegt. Zudem kann aufgrund der im Wesentlichen vertikalen Ausrichtung die Antriebseinheit günstig platzsparend angebracht werden, da vertikaler Bauraum in Lager- und Produktionsstätten zumeist günstiger vorhanden ist als horizontaler Bauraum.

Beispielsweise lässt sich bei einer Gewichtskraft FGw der Antriebskraftübertragungseinrichtung 8 von etwa 400 N und einem Reibungskoeffizient $\mu$ von etwa 1,5 zwischen dem Antriebsriemen 22 und der Antriebsfläche 10 in dem in Fig. 1 gezeigten Ausführungsbeispiel, bei dem die Andruckkraft FDr gleich der Gewichtskraft der Antriebskraftübertragungseinrichtung 8 ist, die Antriebskraft FTr nach der Formel Antriebskraft

$$FTr = \text{Reibungskoeffizient } \mu * \text{Andruckkraft } FDr$$

berechnen und beträgt etwa 600 N.

In Fig. 2 ist eine räumliche Ansicht der Antriebsvorrichtung 1 gemäß Fig. 1 gezeigt, wobei die damit angetriebenen Förderwagen 4 für einen Split Tray Sorter sind, die auf der Seite der Antriebskraftübertragungseinrichtung 8 mittels einer Koppelstange 36 in Förderebene verschwenkbar miteinander gekoppelt sind. Wie in dem Ausführungsbeispiel dargestellt, können die Antriebskraftübertragungseinrichtung 8 und die Koppelstangen 36 bevorzugt auf der gleichen Seite angeordnet sein, nämlich der Kurveninnenseite der Fördereinrichtung 2. Wie weiter in Fig. 2 gezeigt, kann die Antriebskraftübertragungseinrichtung 8 als eine Art Koffermodul ausgebildet sein, wobei an der Grundplatte 30 zwei Griffe 38 zur Handhabung ausgebildet sein können, an denen die Antriebskraftübertragungseinrichtung 8 gehalten und so in die Halterung 32 eingeführt werden kann.

Die Halterung 32 kann als in Förderrichtung RF voneinander beabstandete und zueinander geöffnete Profile 40, insbesondere Li-Profile, ausgebildet sein.

Bei dem in den Fig. 1 und 2 dargestellten Ausführungsbeispiel wird die Andruckkraft FDr ausschließlich von der Gewichtskraft der Antriebskraftübertragungseinrichtung 8 mit der Antriebsquelle 6 aufgebracht. Da die antriebswirksame Fläche 34 wie zuvor beschrieben im Wesentlichen horizontal ausgerichtet ist, wirkt die Andruckkraft FDr im Wesentlichen senkrecht von der antriebswirksamen Fläche 34 auf die Antriebsfläche 10.

Bei dem in Fig. 3 gezeigten weiteren Anordnungsbeispiel, das nicht Teil der Erfindung ist, ist eine Antriebsvorrichtung in einer Draufsicht dargestellt Nachfolgend sind die Unterschiede zu dem zuvor in den Fig. 1 und 2 gezeigten Ausführungsbeispiels beschrieben:

Die Antriebskraftübertragungseinrichtung 8 ist gegenüber der in den Figuren 1 und 2 gezeigten Ausführungsform um etwa 90° verkippt angeordnet. Die Antriebskraftübertragungseinrichtung 8 kann derart in der Halterung 32 aufgenommen sein, dass die antriebswirksame Fläche 34 des Antriebsriemens 22 im Wesentlichen vertikal ausgerichtet sein kann, wobei die antriebswirksame Fläche 34 mit einer im Wesentlichen horizontal und etwa lateral, also etwa senkrecht zur Förderrichtung FR, ausgerichteten Andruckkraft FDr an die Antriebsfläche 10 angedrückt sein kann. Die Antriebsfläche 10 des Förderwagens 4 kann hierbei als eine sich etwa über die gesamte Länge des Förderwagens 4 in Förderrichtung FR erstreckende, etwa vertikal angeordnete Fläche ausgebildet sein, z.B. als eine Schiene.

Deswegen kann die Andruckkraft FDr in diesem Anordnungsbeispiel nicht von der Gewichtskraft der Antriebskraftübertragungseinrichtung 8 bewirkt werden.

Wie in dem Anordnungsbeispiel dargestellt, kann die Andruckkraft FDr mittels einer Andruckeinrichtung 42 bewirkt werden. Beispielsweise kann die Andruckeinrichtung 42 als eine Federandruckeinrichtung ausgebildet sein, die zwischen der Fördereinrichtung 2 und der Antriebskraftübertragungseinrichtung 8 angeordnet ist.

Dabei können die Profile 40 der Halterung 32 mit einem Bügel 44 verbunden sein, an dem sich die Andruckeinrichtung 42 abstützt und somit die Andruckkraft FDr auf die Antriebskraftübertragungseinrichtung 8 bewirken kann.

In dieser Anordnungsbeispiel wird die Funktion des Widerlagerelements 12 von den Führungsrollen 20 des Förderwagens 4 ausgeübt. Die Führungsrollen 20 können dabei ausschließlich auf der Seite der Antriebskraftübertragungseinrichtung 8 angeordnet sein. Dazu können die Führungsrollen 20 in Förderrichtung RF gesehen vorne und hinten am Förderwagen 4 angeordnet sein.

Beispielsweise können die Führungsrollen 20 in einem Führungsprofil 46 angeordnet sein, in dem die Führungsrollen 20 zu beiden lateralen Seiten hin geführt sind und so den Förderwagen 4 gegen eine horizontale Kraft abstützen, beispielsweise eine Fliehkraft bei Kurvenfahrt. Das Führungsprofil 46 kann beispielsweise als nach oben oder unten offenes U-Profil ausgebildet sein.

Dabei können die Führungsrollen 20 insbesondere quer zur Förderrichtung RF mit einem derartigen minimalen Abstand von einer Wirkungslinie 18 der Andruckkraft FDr angeordnet sein, dass eine im Wesentlichen stabile Lage des mittels der beschriebenen Antriebsvorrichtung 1 angetriebenen Förderwagens 4 erreicht und störende Bewegungen des Förderwagens 4 verringert oder vermieden werden.

Allgemein können die Führungsrollen 20 zur Reduktion eines Gierens (Bewegung um eine Hochachse) ausgebildet sein. Dazu können die Widerlagerelemente 12 derart angeordnet sein, dass die Wirkungslinie 18 der Andruckkraft FDr mit dem minimalen Abstand quer zur Förderrichtung RF gesehen zu einer horizontalen Symmetrielinie der Widerlagerelemente 12 beabstandet ist.

Bezugszeichenliste

| | |
|---|---|
| 1 | Antriebsvorrichtung |
| 2 | Fördereinrichtung |
| 4 | Förderwagen |

4F    Förderfläche
6     Antriebsquelle
8     Antriebskraftübertragungseinrichtung
10    Antriebsfläche
12    Widerlagerelement
14    Tragrolle
18    Wirkungslinie der Andruckkraft
20    Führungsrolle
22    Antriebsriemen
24    Antriebsrolle
26    Umlenkrolle
28    Andruckrolle
30    Grundplatte
32    Halterung
34    antriebswirksame Fläche
36    Koppelstange
38    Griff
40    Profil
42    Andruckeinrichtung
44    Bügel
46    Führungsprofil

FDr   Andruckkraft
FTr   Antriebskraft
FGw   Gewichtskraft
RF    Förderrichtung

**Patentansprüche**

1. Fördereinrichtung (2) nämlich Split Tray Sorter, umfassend

zumindest einen Förderwagen (4) mit einer Antriebsfläche (10);
eine Antriebsvorrichtung (1), eingerichtet zum Antreiben des zumindest einen Förderwagens (4) ,
die Antriebsvorrichtung umfasst eine Antriebsquelle (6) zum Erzeugen einer Antriebskraft (FTr) und
eine Antriebskraftübertragungseinrichtung (8) zum Übertragen der Antriebskraft (FTr) auf die Antriebsfläche (10)
des Förderwagens (4),
wobei der Förderwagen (4) einen Aufnahmebereich (4F), insbesondere eine Förderfläche (4F), zur Aufnahme
von Stückgut aufweist,
**dadurch gekennzeichnet,**
**dass** die Antriebsfläche (10) in Draufsicht betrachtet und in Antriebsrichtung betrachtet seitlich neben dem
Aufnahmebereich (4F) angeordnet ist und horizontal ausgerichtet ist.

2. Fördereinrichtung (2) nach Anspruch 1, wobei die Antriebsfläche (10) und/oder der Förderwagen (4) mittels eines
Widerlagerelements (12) gegen eine Andruckkraft (FDr) der Antriebskraftübertragungseinrichtung (8) abgestützt ist.

3. Fördereinrichtung (2) nach einem der vorherigen Ansprüche, wobei das mindestens eine Widerlagerelement (12) als
eine Rolle und/oder als ein Gleitelement des Förderwagens (4) ausgebildet ist.

4. Fördereinrichtung (2) nach einem der vorherigen Ansprüche, wobei das mindestens eine Widerlagerelement (12) als
Tragrolle (14) und/oder als Führungsrolle (20) des Förderwagens (4) ausgebildet ist.

5. Fördereinrichtung (2) nach einem der vorherigen Ansprüche, wobei eine Andruckkraft (FDr) der Antriebskraftübertragungseinrichtung (8) auf die Antriebsfläche (10) im Wesentlichen senkrecht zur Antriebsfläche (10) ausgerichtet ist.

6. Fördereinrichtung (2) nach einem der vorherigen Ansprüche, wobei die Antriebskraftübertragungseinrichtung (8)
eine im Wesentlichen horizontal ausgerichtete antriebswirksame Fläche (34) aufweist, die mit einer im Wesentlichen
vertikal ausgerichteten Andruckkraft (FDr) an die Antriebsfläche (10) angedrückt ist.

7. Fördereinrichtung (2) nach einem der vorherigen Ansprüche, wobei eine Andruckkraft (FDr) der Antriebskraftübertragungseinrichtung (8) zumindest teilweise mittels einer Andruckeinrichtung (42) bewirkt ist.

8. Fördereinrichtung (2) nach einem der vorherigen Ansprüche, wobei die Antriebskraftübertragungseinrichtung (8) einen Antriebsriemen (22) aufweist, der mittels der Andruckkraft (FDr) an die Antriebsfläche (10) drückbar oder angedrückt ist.

9. Fördereinrichtung (2) nach

   einem der vorherigen Ansprüche, wobei der Antriebsriemen (22) um zwei Umlenkrollen (24,26) geschlungen ist, wobei zwischen den beiden Umlenkrollen (24, 26) eine Andruckanordnung (28) vorgesehen ist, die eingerichtet ist, den Antriebsriemen (22) mit der Andruckkraft (FDr) auf die Antriebsfläche (10) zu drücken, insbesondere wobei die Anrduckanordnung (28) eine oder mehrere Andruckrollen (28) umfasst, und/oder insbesondere wobei die Umlenkrollen (24,26) nicht zur Übertragung der Andruckkraft (FDr) auf den Riemen dienen.

10. Fördereinrichtung (2) nach einem der vorherigen Ansprüche, wobei die Fördereinrichtung (2) eine Mehrzahl von in vorbestimmten Abständen zueinander angeordneten Antriebskraftübertragungseinrichtungen (8) aufweist.

11. Fördereinrichtung (2) nach einem der vorherigen Ansprüche, wobei das Widerlagerelement (12) in einem minimalen Abstand zu einer Wirkungslinie einer Andruckkraft (FDr) der Antriebskraftübertragungseinrichtung (8) ausgebildet ist, der kleiner ist als etwa 50 mm.

12. Fördereinrichtung (2) nach einem der vorherigen Ansprüche, wobei die Antriebskraftübertragungseinrichtung (8) in eine an der Fördereinrichtung (2) ausgebildeten Halterung (32) einführbar und darin arretierbar ist.

13. Fördereinrichtung (2) nach einem der vorherigen Ansprüche, wobei die Antriebsvorrichtung (1) im Betrieb ortsfest angeordnet ist.

**Claims**

1. Conveyor device (2) namely a split tray sorter, comprising

   at least one conveyor wagon (4) with a drive surface (10);
   a drive device (1), adapted for driving the at least one conveyor wagon (4) ,
   the drive device comprises a drive source (6) for producing a drive force (FTr) and a drive force transmitting device (8) for transmitting the drive force (FTr) to the drive surface (10) of the conveyor wagon (4),
   wherein the conveyor wagon (4) has a receiving region (4F), in particular a conveyor surface (4F), for receiving bulk goods,
   **characterized in**
   **that** the drive surface (10) when viewed in plan view and when viewed in the drive direction is arranged laterally next to the receiving region (4F) and is aligned horizontally.

2. Conveyor device (2) according to claim 1, wherein the drive surface (10) and/or the conveyor wagon (4) is supported by means of a counterbearing element (12) against a pressing force (FDr) of the drive force transmitting device (8).

3. Conveyor device (2) according to one of the preceding claims, wherein the at least one counterbearing element (12) is configured as a roller and/or as a sliding element of the conveyor wagon (4).

4. Conveyor device (2) according to one of the preceding claims, wherein the at least one counterbearing element (12) is configured as a support roller (14) and/or as a guide roller (20) of the conveyor wagon (4).

5. Conveyor device (2) according to one of the preceding claims, wherein a pressing force (FDr) of the drive force transmitting device (8) on the drive surface (10) is aligned substantially perpendicularly to the drive surface (10).

6. Conveyor device (2) according to one of the preceding claims, wherein the drive force transmitting device (8) comprises a substantially horizontally aligned drive-effective surface (34) which is pressed with a substantially vertically aligned pressing force (FDr) onto the drive surface (10).

7. Conveyor device (2) according to one of the preceding claims, wherein a pressing force (FDr) of the drive force transmitting device (8) is brought about at least partially by means of a pressing device (42).

8. Conveyor device (2) according to one of the preceding claims, wherein the drive force transmitting device (8) comprises a drive belt (22) which can be pressed or is pressed by means of the pressing force (FDr) onto the drive surface (10).

9. Conveyor device (2) according to one of the preceding claims, wherein the drive belt (22) is wound around two deflecting rollers (24, 26), wherein a pressing arrangement (28) is provided between the two deflecting rollers (24, 26), which is adapted to press the drive belt (22) with the pressing force (FDr) onto the drive surface (10), in particular wherein the pressing arrangement (28) comprises one or more pressing rollers (28) and/or in particular wherein the deflecting rollers (24, 26) do not serve to transmit the pressing force (FDr) onto the belt.

10. Conveyor device (2) according to one of the preceding claims, wherein the conveyor device (2) comprises a plurality of drive force transmitting devices (8) arranged at pre-determined distances from one another.

11. Conveyor device (2) according to one of the preceding claims, wherein the counterbearing element (12) is formed at a minimal distance from a line of action of a pressing force (FDr) of the drive force transmitting device (8) which is less than about 50 mm.

12. Conveyor device (2) according to one of the preceding claims, wherein the drive force transmitting device (8) can be introduced into a holder (32) formed on the conveyor device (2) and locked therein.

13. Conveyor device (2) according to one of the preceding claims, wherein the drive device (1) is arranged in a fixed position during operation.


**Revendications**

1. Système de convoyage (2) à savoir trieur Split Tray comprenant au moins un chariot de convoyage (4) pourvu d'une surface d'entraînement (10) ; d'un dispositif d'entraînement (1), configuré pour entraîner l'au moins un chariot de convoyage (4) ,

   le dispositif d'entraînement comprend une source d'entraînement (6), destinée à générer une force d'entraînement (FTr) et
   un système de transmission (8) de la force d'entraînement, destiné à transmettre la force d'entraînement (FTr) sur la surface d'entraînement (10) du chariot de convoyage (4),
   le chariot de convoyage (4) comportant une zone de réception (4F), notamment une surface de convoyage (4F), destinée à recevoir des produits au détail,
   **caractérisé**
   **en ce que**, vue en élévation et considérée dans la direction d'entraînement, la surface d'entraînement (10) est placée latéralement à côté de la zone de réception (4F) et est orientée à l'horizontale.

2. Système de convoyage (2) selon la revendication 1, la surface d'entraînement (10) et / ou le chariot de convoyage (4) étant soutenu au moyen d'un élément de butée (12) à l'encontre d'une force de pression (FDr) du système de transmission (8) de la force d'entraînement.

3. Système de convoyage (2) selon l'une quelconque des revendications précédentes, l'au moins un élément de butée (12) étant conçu sous la forme d'un galet et / ou d'un élément coulissant du chariot de convoyage (4).

4. Système de convoyage (2) selon l'une quelconque des revendications précédentes, l'au moins un élément de butée (12) étant conçu sous la forme d'un galet porteur (14) et / ou d'un galet de guidage (20) du chariot de convoyage (4).

5. Système de convoyage (2) selon l'une quelconque des revendications précédentes, une force de pression (FDr) du système de transmission (8) de la force d'entraînement étant orientée vers la surface d'entraînement (10), sensiblement à la perpendiculaire de la surface d'entraînement (10).

6. Système de convoyage (2) selon l'une quelconque des revendications précédentes, le système de transmission (8) de la force d'entraînement comportant une surface (34) active en entraînement, orientée sensiblement à l'horizontale, qui est pressée avec une force de pression (FDr) orientée sensiblement à la verticale contre la surface d'entraînement (10).

7. Système de convoyage (2) selon l'une quelconque des revendications précédentes, une force de pression (FDr) du système de transmission (8) de la force d'entraînement étant provoquée au moins en partie au moyen d'un système presseur (42).

8. Système de convoyage (2) selon l'une quelconque des revendications précédentes, le système de transmission (8) de la force d'entraînement comportant une courroie d'entraînement (22), qui est susceptible d'être pressée ou qui est pressée au moyen de la force de pression (FDr) contre la surface d'entraînement (10).

9. Système de convoyage (2) selon l'une quelconque des revendications précédentes, la courroie d'entraînement (22) étant enroulée autour de deux galets de renvoi (24,26), entre les deux galets de renvoi (24, 26) étant prévu un agencement presseur (28), qui est configuré pour presser la courroie d'entraînement (22) par la force de pression (FDr) sur la surface d'entraînement (10),

   notamment l'agencement presseur (28) comprenant un ou plusieurs galets presseurs (28), et/ou
   notamment les galets de renvoi (24,26) ne servant pas à transmettre la force de pression (FDr) sur la courroie.

10. Système de convoyage (2) selon l'une quelconque des revendications précédentes, le système de convoyage (2) comportant une pluralité de systèmes de transmission (8) de la force d'entraînement, placés à des écarts mutuels prédéfinis.

11. Système de convoyage (2) selon l'une quelconque des revendications précédentes, l'élément de butée (12) étant conçu avec un écart minimal par rapport à une ligne d'action d'une force de pression (FDr) du système de transmission (8) de la force d'entraînement, qui est inférieur à environ 50 mm.

12. Système de convoyage (2) selon l'une quelconque des revendications précédentes, le système de transmission (8) de la force d'entraînement étant insérable dans une fixation (32) conçue sur le système de convoyage (2) et pouvant être bloqué à l'intérieur de celle-ci.

13. Système de convoyage (2) selon l'une quelconque des revendications précédentes, le dispositif d'entraînement (1) étant placé de manière stationnaire pendant son fonctionnement.

**Fig. 1**

**Fig. 2**

**Fig. 3**

**IN DER BESCHREIBUNG AUFGEFÜHRTE DOKUMENTE**

**In der Beschreibung aufgeführte Patentdokumente**

- DE 102017006212 A1
- US 6244188 B1
- US 20070283839 A1
- EP 1448463 B1
- JP H04226213 A